Europäisches Patentamt

European Patent Office

Office européen des brevets

(11) Numéro de publication: 0 234 171 B1

# FASCICULE DE BREVET EUROPEEN

(45) Date de publication de fascicule du brevet:
27.03.91

(51) Int. Cl.⁵ B23B 29/034

(21) Numéro de dépôt: 86440089.0

(22) Date de dépôt: 16.10.86

(54) Tête d'alésage.

(30) Priorité: 16.01.86 FR 8600814
01.08.86 FR 8611293

(43) Date de publication de la demande:
02.09.87 Bulletin 87/36

(45) Mention de la délivrance du brevet:
27.03.91 Bulletin 91/13

(84) Etats contractants désignés:
AT BE CH DE ES GB GR IT LI LU NL SE

(56) Documents cités:
DE-A- 2 000 184      DE-B- 2 931 508
DE-C- 207 061        FR-A- 2 369 046
FR-E- 10 278         US-A- 4 162 867

(73) Titulaire: Pfalzgraf, Emile
7, rue de Neuwiller
F-67330 Bouxwiller(FR)

(72) Inventeur: Pfalzgraf, Emile
7, rue de Neuwiller
F-67330 Bouxwiller(FR)

(74) Mandataire: Nuss, Pierre
10, rue Jacques Kablé
F-67000 Strasbourg(FR)

**Description**

La présente invention concerne le domaine de l'usinage par alésage sur machines conventionnelles ou à commande numérique, sur centres d'usinage ou au moyen d'équipements d'ateliers flexibles, et a pour objet une tête d'alésage selon le préambule de la revendication 1. Une telle tête d'alésage est connue du FR-E- 10278. Un autre objet est une tête d'alésage selon le préambule de la revendication 6. Une telle tête d'alésage est connue du FR-A-2369046.

Il est connu par FR-A-2 563 132 et par la demande de certificat d'addition correspondante 84 14 315 des têtes ébauches dont les porte-plaquettes sont réglés séparément en diamètre et dont l'un des porte-plaquettes est réglable séparément en hauteur.

Ces têtes d'alésage de bonne qualité présentent, cependant, l'inconvénient de nécessiter un réglage sur banc de préréglage ou au moyen d'appareils de réglage spéciaux.

On connaît également, par FR-E-10 278 un porte-outils destiné à la fixation de différents outils pouvant se déplacer mais qui nécessitent pour leur fixation plusieurs pièces, corps, manchons de fixation, roue dentée, clé dentée. Ce type de porte-outils nécessite des outils d'une forme spéciale réduisant considérablement la rigidité de ces derniers. Par ailleurs, un dégagement important doit être prévu pour permettre le réglage desdits outils. D'autre part, ces porte-outils ne peuvent être utilisés pour de gros travaux d'alésage.

En outre, on connaît par FR-A-2 369 046 un outil pour l'ébarbage d'alésages, dans lequel est réalisé une repousse élastique des couteaux par l'intermédiaire d'un ressort, dont la tension est réalisée par un ensemble à roue et à vis. Dans ce document, sont prévus des prolongements (25) de la vis qui coopèrent avec les outils d'ébarbage. Toutefois, le mode de réalisation décrit dans ce document ne permet pas l'obtention d'un réglage radial fin des outils.

La présente invention a pour but de pallier ces inconvénients.

Elle a, en effet, pour objet une tête d'alésage, essentiellement constituée par un corps de fixation dans un support de montage, par un boîtier de réception de pièces en mouvement monté avec possibilité de déplacement axial dans le corps, par un dispositif de réglage radial des outils, et par un moyen d'actionnement dudit dispositif de réglage, le dispositif de réglage et le moyen d'actionnement étant maintenus dans le boîtier, caractérisée en ce que le boîtier est sous forme d'une pièce cylindrique montée dans un alésage de réception du corps, de manière réglable en position, et munie, d'une part, d'un alésage débouchant sur la face du boîtier tournée vers le fond de l'alésage du corps, et d'un alésage de plus grand diamètre relié au premier alésage, concentrique à ce dernier, et débouchant sur l'autre face du boîtier, et, d'autre part, d'une rainure en arc de cercle, s'étendant partiellement autour du premier alésage dans le fond du deuxième alésage, et d'une rainure longitudinale fermée s'étendant parallèlement à son axe longitudinal sur une génératrice extérieure et coopérant avec une vis fixée dans le corps et formant butée d'arrêt, l'accès à cette vis étant protégé par une pastille.

Selon une variante de réalisation de l'invention, la tête d'alésage est essentiellement constituée par un corps de fixation dans un support de montage, par un dispositif de réglage radial des outils, et par un moyen d'actionnement du dispositif, le dispositif de réglage et le moyen d'actionnement étant maintenus directement dans le corps, le dispositif de réglage radial des outils étant monté dans le corps avec possibilité de déplacement axial sous l'action du moyen d'actionnement, et étant constitué sous forme d'une roue d'entraînement, mobile en rotation et coopérant, au moyen de piges avec des rainures transversales des outils à régler en vue du déplacement en sens contraire de ces derniers l'un par rapport à l'autre, l'extrémité libre de la tige de la roue étant chargée par un ressort axial logé dans un perçage du corps et la roue d'entraînement étant entraînée en rotation au moyen d'une vis de réglage s'étendant orthogonalement à la tige de la roue, et est caractérisée en ce que la vis de réglage entraîne un tenon muni d'un logement coopérant avec l'une des piges traversant à cet effet la roue, et est maintenue dans son logement, contre une translation, au moyen d'une goupille coopérant avec une gorge prévue à son extrémité.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue en élévation et partiellement en coupe d'une tête d'alésage conforme à l'invention;

la figure 2 est une vue en coupe suivant A-A de la figure 1 ;

la figure 3 est une vue en coupe suivant B-B de la figure 1 ;

la figure 4 est une vue en coupe suivant C-C de la figure 1 ;

la figure 5 est une vue en plan, à plus grande échelle du boîtier 2 ;

la figure 6 est une vue en coupe suivant D-D de la figure 5 ;

la figure 7 est une vue en élévation latérale , partiellement en coupe, du dispositif de réglage radial ;

la figure 8 est une vue en plan suivant la figure 7 ;

la figure 9 est une vue en élévation et partiellement en coupe d'une variante de réalisation de la tête suivant la figure 1 ;

la figure 10 est une vue en coupe suivant A-A de la figure 9 ;

la figure 11 est une vue en coupe suivant B-B de la figure 9,et

la figure 12 est une demi-vue en coupe suivant C-C de la figure 9.

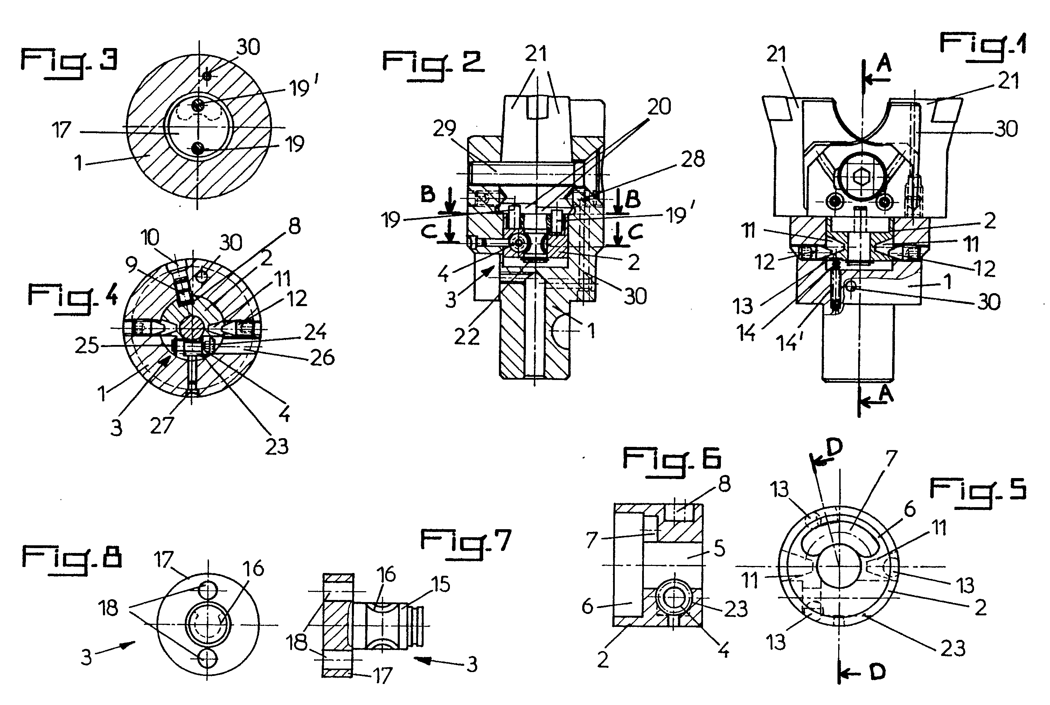

Conformément à l'invention, et comme le montrent plus particulièrement, à titre d'exemple, les figures 1 à 4 des dessins annexés, la tête d'alésage qui est essentiellement constituée par un corps 1 de fixation dans un support de montage et dans lequel est monté, avec possibilité de déplacement axial, un boîtier 2 de réception des pièces en mouvement, par un dispositif 3 de réglage radial des outils, et par un moyen 4 d'actionnement du dispositif 3, ce dernier et le moyen 4 étant maintenus dans le boîtier 2, est caractérisée en ce que le boîtier 2 (figures 5 et 6) est sous forme d'une pièce cylindrique montée dans un alésage de réception du corps 1, de manière réglable en position, et munie, d'une part, d'un alésage 5 débouchant sur la face du boîtier 2 tournée vers le fond de l'alésage du corps 1, et d'un alésage 6 de plus grand diamètre relié à l'alésage 5, concentrique à ce dernier, et débouchant sur l'autre face du boîtier 2, et, d'autre part, d'une rainure en arc de cercle 7 s'étendant partiellement autour de l'alésage 5 dans le fond de l'alésage 6, et d'une rainure longitudinale fermée 8 s'étendant parallèlement à son axe longitudinal sur une génératrice extérieure et coopérant avec une vis 9 fixée dans le corps 1 et formant butée d'arrêt, l'accès à cette vis 9 étant protégé par une pastille 10.

La vis 9 permet, par positionnement dans la rainure 8, de limiter le déplacement du boîtier 2, et la pastille 10, qui peut être réalisée avantageusement en matière synthétique, est destinée à éviter tout accès indésirable à la vis 9.

Le boîtier 2 est pourvu, en outre, sur sa génératrice, de deux trous coniques 11 diamétralement opposés coopérant avec deux vis à bout conique 12 fixées dans le corps 1 et déplaçant le boîtier 2 en direction du fond de l'alésage du corps 1, et sur sa face tournée vers le fond de l'alésage du corps 1, à intervalles réguliers, de trous 13 de guidage et de maintien de ressorts 14 chargeant cette dite face.

Le dispositif 3 de réglage axial se présente sous forme d'un élément cylindrique épaulé dont la partie de plus petit diamètre 15 est munie d'une denture hélicoïdale 16 s'étendant sur la majeure partie de sa circonférence, ou sur toute sa circonférence, et est logée dans l'alésage 5 du boîtier 2,

et dont la partie de plus gros diamètre 17 est en forme de disque logé dans l'alésage 6 du boîtier 2 et est munie de deux trous diamétralement opposés 18 de réception de piges19 et 19' coopérant avec des rainures transversales 20 des outils à régler 21, le dispositif 3 étant fixé de manière libre en rotation dans le boîtier 2 au moyen d'une bague élastique 22 (figures 1, 2, 7 et 8).

Le moyen 4 d'actionnement du dispositif 3 (figures 2 et 4) est sous forme d'une vis sans fin positionnée dans un logement 23 du boîtier 2 tangentiellement et perpendiculairement à l'alésage 5 à liaison d'engrènement avec la denture hélicoïdale 16 du dispositif 3, cette vis 4 étant pourvue à une extrémité d'un polygone de manoeuvre sous forme d'un six pans creux 24, accessible à travers un trou 26 du corps 1, et une bague élastique 25 fixée sur son autre extrémité assurant son maintien dans le logement 23. La lubrification de la liaison entre vis sans fin 4 et denture hélicoïdale 16 est assurée au moyen d'un graisseur 27 (figure 4).

Les piges 19 et 19' sont fixées dur ou collées dans les trous 18 de la partie 17 de gros diamètre du dispositif 3, et l'une des piges 19 est montée en saillie vers l'outil 21 correspondant et à fleur avec la face inférieure de la partie 17, tandis que l'autre pige 19' est en saillie des deux côtés de la partie 17, d'une hauteur environ égale à la moitié de celle en saillie de la pige 19 et correspondant au déplacement axial possible du boîtier 2 dans l'alésage du corps 1, et pénètre, à sa partie inférieure, dans la rainure en arc de cercle 7 du boîtier 2, et à sa partie supérieure dans la rainure transversale 20 de l'outil 21 correspondant.

Ainsi, la rainure 7 sert de butée au dispositif 3 dans les deux sens de rotation possibles. En outre, en position haute du boîtier 2, les piges 19 et 19' pénètrent dans les rainures 20 des outils 21 correspondants, tandis que dans la position basse du boîtier 2, en pression contre l'action des ressorts 14 sous l'effet du serrage des vis 12, la pige 19' n'est plus dans la rainure 20 correspondante, seule la pige 19 restant partiellement dans la rainure 20 lui correspondant.

Les outils 21 sont, de préférence, des porte-plaquettes et les piges 19 et 19' permettent leur déplacement par l'intermédiaire des rainures 20.

Les ressorts 14 sont destinés à appliquer une pression constante vers le haut du boîtier 2 qui est retenu axialement et en rotation grâce à la rainure 8 coopérant avec la vis 9. En outre, les ressorts 14 sont guidés dans des trous profonds 14' prevus dans le corps 1.

Pour réaliser le réglage symétrique des porte-plaquettes 21, les piges 19 et 19' doivent pénétrer dans les rainures 20 desdits porte-plaquettes 21. Au préalable, le boîtier 2 est amené en position basse contre l'action des ressorts 14 par vissage des vis 12 dans les trous 11, puis le porte-plaquettes 21 correspondant à la pige 19 est introduit dans le corps 1 jusqu'à correspondance de sa rainure 20 avec ladite pige 19, ensuite le deuxième porte-plaquettes est également mis en place.

Les vis 12, sont alors desserrées pour permettre le déplacement du boîtier 2 vers le haut sous la poussée des ressorts 14, et le deuxième porte-plaquettes 21 est déplacé de manière à permettre la pénétration de la pige 19' correspondante dans sa rainure 20.

Dès que cette opération est réalisée, les vis 28 de calage des porte-plaquettes 21 sont légèrement serrées et la vis 29 de serrage des porte-plaquettes dans le corps 1 est mise en place. La vis sans fin formant le moyen 4 est alors actionnée au moyen d'une clé et entraîne le dispositif 3 en rotation dans un sens ou dans l'autre afin de réaliser le déplacement des porte-plaquettes 21 au moyen des piges 19 et 19'. Lorsque la cote requise, mesurée au moyen d'un pied à coulisse, ou de tout autre dispositif adapté, est atteinte, les porte-plaquettes 21 sont bloqués au moyen des vis de calage 28 et de la vis de serrage 29.

Il est également possible, de réaliser un réglage séparé ou indépendant des porte-plaquettes 21 ainsi qu'un réglage en hauteur d'un porte-plaquettes. A cet effet, la tête est montée par un banc de préréglage et la vis centrale de serrage 29 est desserrée et les vis 28 sont également légèrement desserrées, puis les vis 12 sont bloquées afin de déplacer le boîtier 2 vers le bas dans l'alésage du corps 1 contre l'action des ressorts 14 et afin de dégager l'un des porte-plaquettes 21 entièrement de la pige correspondante 19', ce porte-plaquettes pouvant alors être réglé simultanément en hauteur. Puis l'autre porte-plaquette 21 est déplacé au moyen de la vis sans fin 4 agissant sur le dispositif 3 jusqu'à atteinte de la cote désirée. Ensuite, le premier porte-plaquettes 21 est réglé manuellement de manière à être décalé par rapport à l'autre d'une largeur environ égale à la moitié de la largeur des copeaux à enlever. Après ce déplacement radial, le déplacement axial de ce porte-plaquettes, pour l'obtention du décalage en hauteur par rapport à l'autre, est effectué de la manière décrite dans FR-A-2 563 132, puis les vis 28 et 29 sont à nouveau serrées.

Par ailleurs, la tête d'alésage est munie, de manière connue, de canaux 30 de lubrification des outils.

La figure 9 représente une variante de réalisation de l'invention, dans laquelle le dispositif 3 de réglage radial des outils 21 est monté dans le corps 1 avec possibilité de déplacement axial sous l'action du moyen d'actionnement 4', et est constitué sous forme d'une roue d'entraînement 31, mobile en rotation et coopérant, au moyen de piges 19 et 19' avec des rainures transversales 20 des outils à régler 21 en vue du déplacement en sens contraire de ces derniers l'un par rapport à l'autre.

Les piges 19 et 19' sont emmanchées à force ou collées dans des trous correspondants de la roue 31.

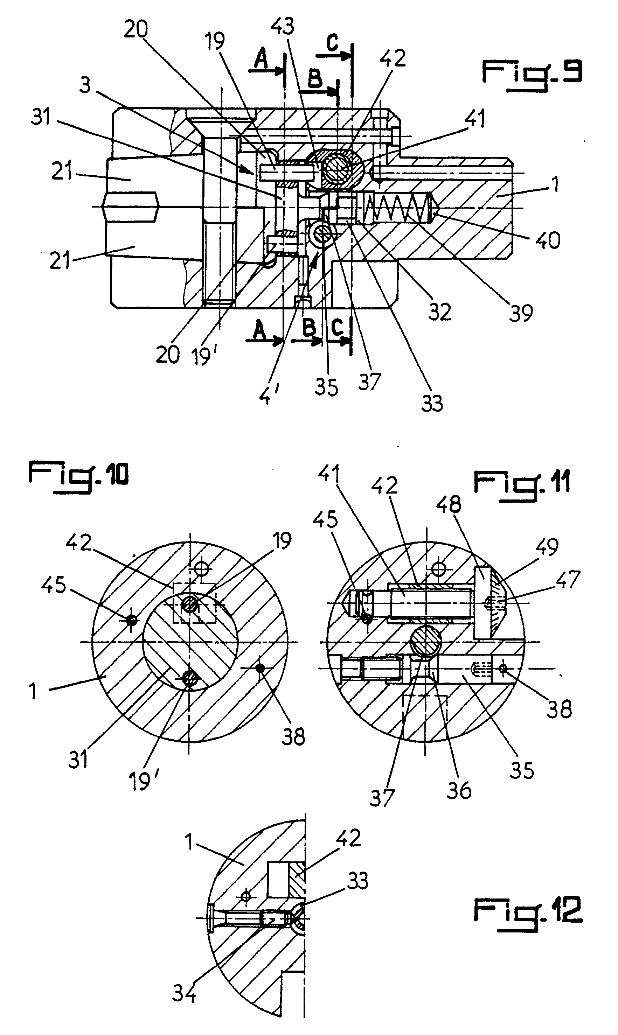

La roue 31 comporte, du côté opposé aux outils 21, une tige 32 munie près de son extrémité libre d'une rainure circonférentielle large 33 de maintien en hauteur dans le corps 1, et dans laquelle pénètre une vis d'arrêt 34 de limitation du déplacement axial de la roue 31 (figures 9 et 12).

Le moyen 4' d'actionnement en déplacement axial du dispositif 3 est constitué par une vis à came 35 s'étendant orthogonalement à l'axe de la roue 31 et présentant dans sa partie médiane un dégagement dont l'extrémité opposée du filetage de la vis 35 est sous forme d'un cône 36 qui coopère avec un cône 37 prévu sur la tige 32 de la roue 31 entre la rainure 33 et ladite roue 31, une goupille 38, dépassant légèrement dans le logement de la vis à came 35, limitant le déplacement de cette dernière dans le sens de l'éloignement de son cône 36 du cône 37 de la roue 31 (figure 11).

La vis à came 35 est pourvue, de manière connue, d'un six pans creux pour sa manoeuvre.

L'extrémité libre de la tige 32 de la roue 31 est chargée par un ressort axial 39 logé dans un perçage 40 du corps 1 (figure 9).

Ainsi, lors d'une rotation de la vis à came 35, la roue 31 est déplacée grâce à la coopération des cônes 36 et 37, le ressort 39 exerçant une pression continue sur la tige 32 tendant à déplacer la roue 31 en direction des outils 21, déplacement dont la course est limitée par la vis d'arrêt 34.

La roue d'entraînement 31 est entraînée en rotation au moyen d'une vis de réglage 41 s'étendant orthogonalement à la tige 32 de la roue 31, entraînant un tenon 42 muni d'un logement 43 coopérant avec l'une des piges 19 traversant à cet effet la roue 31, et maintenue dans son logement 44, contre une translation, au moyen d'une goupille 45 coopérant avec une gorge 46 prévue à son extrémité (figures 9 et 12).

La manoeuvre de la vis 41 est avantageusement réalisée au moyen d'un six pans creux 47, et la tête 48 de la vis présente une face conique munie de graduations 49 (figure 11). Ainsi, la rotation de la roue 31 par manoeuvre de la vis 41 entraîne un déplacement des outils ou porte-plaquettes 21 au moyen des piges 19 et 19' dont l'une 19 est entraînée par le tenon 42 lors de son déplacement le long de la vis 41.

Les graduations 49 prévues sur la face conique de la tête 48 de la vis 41 sont destinées à faciliter le réglage du déplacement des porte-plaquettes ou outils 21.

Grâce à l'invention, il est possible de réaliser un déplacement simultané et symétrique de deux outils ou porte-plaquettes dans leur logement d'un corps de fixation par l'intermédiaire d'une seule vis de réglage. Le dépla cement ou le diamètre desdits outils ou porte-plaquettes peut être mesuré facilement au moyen d'un pied à coulisse ou d'un palmer, et les réglages plus fins nécessaires sont facilités grâce aux graduations 49 de la vis de réglage 41.

Le déplacement symétrique et simultané des porte-plaquettes ou outils 21 est réalisé lorsque la roue d'entraînement 31 présente sa face tournée vers les porte-plaquettes au niveau de la face d'appui de ces derniers, c'est-à-dire lorsque le cône 36 de la vis à came 35 est en position entièrement rétractée par rapport au cône 37 de la tige 32 de la roue 31.

Il est également possible de réaliser un déplacement indépendant des outils ou porte-plaquettes 21. A cet effet, chaque outil 21 est positionné sur un diamètre différent, et celui correspondant à la pige d'entraînement 19′ est avantageusement décalé en hauteur par rapport à l'autre d'environ 0,5 mm en plus, ce dernier outil étant, en outre, positionné sur un diamètre plus faible que celui correspondant à la pige 19.

Pour ce réglage asymétrique et en hauteur, la roue d'entraînement 31 sera poussée à fond contre le ressort 39, et donc en retrait du plan d'appui des porte-plaquettes ou outils 21, de sorte que la pige 19′ n'est plus engagée dans la rainure 20 correspondante, seule la pige 19 restant en prise. Le déplacement du porte-plaquettes ou outils 21 correspondant à la pige 19 s'effectuera donc toujours par l'intermédiaire de la vis de réglage 41, alors que celui de l'autre outil ou porte-plaquettes s'effectuera manuellement.

La rotation de la roue d'entraînement 31 est limitée par le déplacement possible du tenon d'entraînement 42.

Pour le montage des outils ou porte-plaquettes 21, la roue d'entraînement 31 doit toujours être amenée en position rétractée dans le corps au moyen de la vis à came 35, l'outil 21 correspondant à la pige 19 étant introduit en premier et, suivant le procédé d'usinage prévu, la roue d'entraînement est alors libérée ou non en dépla cement axial.

Grâce à l'invention, il est possible de réaliser une tête d'alésage permettant une grande souplesse d'utilisation du fait de ses différents réglages simples possibles, tout en conservant une robustesse nécessaire de l'ensemble et des performances maximales. En outre, l'invention permet de supprimer un nombre important de vis de réglage et donc également les clés correspondantes, le réglage et le déplacement symétrique de deux porte-plaquettes pouvant être effectué avec une vis et une clé uniques avec un instrument de contrôle très simple.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

## Revendications

1. Tête d'alésage, essentiellement constituée par un corps (1) de fixation dans un support de montage, par un boîtier (2) de réception de pièces en mouvement monté avec possibilité de déplacement axial dans le corps (1), par un dispositif (3) de réglage radial des outils, et par un moyen (4) d'actionnement du dispositif (3) , le dispositif de réglage (3) et le moyen d'actionnement (4) étant maintenus dans le boîtier (2), caractérisée en ce que le boîtier (2) est sous forme d'une pièce cylindrique montée dans un alésage de réception du corps (1), de manière réglable en position, et munie, d'une part, d'un premier alésage (5) débouchant sur la face du boîtier (2) tournée vers le fond de l'alésage du corps (1), et d'un deuxième alésage (6) de plus grand diamètre relié au premier alésage (5), concentrique à ce dernier, et débouchant sur l'autre face du boîtier (2), et, d'autre part, d'une rainure en arc de cercle (7) s'étendant partiellement autour du premier alésage (5) dans le fond du deuxième alésage (6) , et d'une rainure longitudinale fermée (8) s'étendant parallèlement à son axe longitudinal sur une génératrice extérieure et coopérant avec une vis (9) fixée dans le corps (1) et formant butée d'arrêt, l'accès à cette vis (9) étant protégé par une pastille (10).

2. Tête d'alésage, suivant la revendication 1, caractérisée en ce que le boîtier (2) est pourvu, en outre, sur sa génératrice, de deux trous coniques (11) diamétralement opposés coopérant avec deux vis à bout conique (12) fixées dans le corps (1) et déplaçant le boîtier (2) en direction du fond de l'alésage du corps (1), et sur sa face tournée vers le fond de l'alésage du corps (1), à intervalles réguliers, de trous (13) de guidage et de maintien de ressorts (14) chargeant cette dite face.

3. Tête d'alésage, suivant l'une quelconque des revendications 1 et 2, caractérisée en ce que le dispositif (3) de réglage radial se présente sous forme d'un élément cylindrique épaulé dont la partie de plus petit diamètre (15) est munie d'une denture hélicoïdale (16) s'étendant sur la majeure partie de sa circonférence, ou sur toute sa circonférence, et est logée dans le premier alésage (5) du boîtier (2), et dont la partie de plus gros diamètre (17) est en forme de disque logé dans le deuxième alésage (6) du boîtier (2) et est munie de deux trous diamétralement opposés (18) de réception de piges (19 et 19') coopérant avec des rainures transversales (20) des outils à régler (21), le dispositif (3) étant fixé de manière libre en rotation dans le boîter (2) au moyen d'un bague élastique (22).

4. Tête d'alésage, suivant l'une quelconque des revendications 1 à 3, caractérisée en ce que le moyen (4) d'actionnement du dispositif (3) est sous forme d'une vis sans fin positionnée dans un logement (23) du boîtier (2) tangentiellement et perpendiculairement au premier alésage (5) à liaison d'engrènement avec la denture hélicoïdale (16) du dispositif (3), cette vis (4) étant pourvue à une extrémité d'un polygone de manoeuvre sous forme d'un six-pans creux (24) accessible à travers un trou (26) du corps (1), et une bague élastique (25) fixée sur son autre extrémité assurant son maintien dans le logement (23).

5. Tête d'alésage, suivant l'une quelconque des revendications 1 à 4, caractérisée en ce que les piges (19 et 19') sont fixées dur ou collées dans les trous (18) de la partie (17) de gros diamètre du dispositif (3), et l'une des piges (19) est montée en saillie vers l'outil (21) correspondant et à fleur avec la face inférieure de la partie (17), tandis que l'autre pige (19') est en saillie des deux côtés de la partie (17) d'une hauteur environ égale à la moitié de celle en saillie de la pige (19), et correspondant au déplacement axial possible du boîtier (2) dans l'alséage du corps (1), et pénètre, à sa partie inférieure, dans la rainure en arc de cercle (7) du boîtier (2), et à sa partie supérieure dans la rainure transversale (20) de l'outil (21) correspondant.

6. Tête d'alésage, essentiellement constituée par un corps (1) de fixation dans un support de montage, par un dispositif (3) de réglage radial des outils, et par un moyen (4') d'actionnement du dispositif (3), le dispositif de réglage (3) et le moyen d'actionnement (4') étant maintenus directement dans le corps (1), le dispositif (3) de réglage radial des outils (21) étant monté dans le corps (1) avec possibilité de déplacement axial sous l'action du moyen d'actionnement (4'), et étant constitué sous forme d'une roue d'entraînement (31), mobile en rotation et coopérant, au moyen de piges (19 et 19') avec des rainures transversales (20) des outils à régler (21) en vue du déplacement en sens contraire de ces derniers l'un par rapport à l'autre, l'extrémité libre de la tige (32) de la roue (31) étant chargée par un ressort axial (39) logé dans un perçage (40) du corps (1) et la roue d'entraînement (31) étant entraînée en rotation au moyen d'une vis de réglage (41) s'étendant orthogonalement à la tige (32) de la roue (31), caractérisée en ce que la vis de réglage (41) entraîne un tenon (42) muni d'un logement (43) coopérant avec l'une des piges (19) traversant à cet effet la roue (31), et est maintenue dans son logement (44), contre une translation, au moyen d'une goupille (45) coopérant avec une gorge (46) prévue à son extrémité.

7. Tête d'alésage, suivant la revendication 6, caractérisée en ce que la roue (31) comporte, du côté opposé aux outils (21), une tige (32), munie près de son extrémitré libre d'une rainure circonférentielle large (33) de maintien en hauteur dans le corps (1), et dans laquelle pénètre une vis d'arrêt (34) de limitation du déplacement axial de la roue (31).

8. Tête d'alésage, suivant l'une quelconque des revendications 6 et 7, caractérisée en ce que le moyen (4') d'actionnement en déplacement axial du dispositif (3) est constitué par une vis à came (35) s'étendant orthogonalement à l'axe de la roue (31) et présentant dans sa partie médiane un dégagement dont l'extrémité opposée au filetage de la vis (35) est sous forme d'un cône (36) qui coopère avec un cône (37) prévu sur la tige (32) de la roue (31) entre la rainure (33) et ladite roue (31), une goupille (38), dépassant légèrement dans le logement de la vis à came (35), limitant le déplacement de cette dernière dans le sens de l'éloignement de son cône (36) du cône (37) de la roue (31).

9. Tête d'alésage, suivant la revendication 6, caractérisée en ce que la manoeuvre de la vis (41) est avantageusement réalisée au moyen d'un six-pans creux (47), et la tête (48) de la vis présente une face conique munie de graduations (49).

**Claims**

1. A boring head, essentially formed by a body (1) for fixing in a mounting support, by a casing (2) for receiving moving parts mounted with the possibility of axial displacement in the body (1), by a device (3) for radial adjustment of the tools, and by a means (4) for actuating the device (3), the adjusting device (3) and the actuating means (4) being held in the casing (2), characterised in that the casing (2) is in the form of a cylindrical part mounted adjustably in position in a receiving bore of the body (1) and equipped, on the one hand, with a first bore (5) opening at the face of the casing (2) turned toward the bottom of the bore of the body (1) and with a second bore (6) of greater diameter which is connected to the first bore (5), is concentric thereto and opens at the other face of the casing (2) and, on the other hand, with an arc-shaped groove (7) extending partially round the first bore (5) in the bottom of the second bore (6) and with a closed longitudinal groove (8) extending parallel to its longitudinal axis over an external generatrix and co-operating with a screw (9) fixed in the body (1) and forming an abutment, the access to this screw (9) being protected by a pad (10).

2. A boring head according to claim 1, characterised in that the casing (2) is also provided, at its generatrix, with two diametrally opposed conical holes (11) co-operating with two conically tipped screws (12) fixed in the body (1) and displacing the casing (2) toward the bottom of the bore of the body (1) and, at its face turned toward the bottom of the bore of the body (1), at regular intervals, with holes (13) for guiding and holding springs (14) loading said face.

3. A boring head according to any one of claims 1 and 2, characterised in that the device (3) for radial adjustment assumes the form of a shouldered cylindrical element of which the portion of smallest diameter (15) is equipped with helical teeth (16) extending over the majority of its circumference or over all of its circumference and is accommodated in the first bore (5) of the casing (2) and of which the portion of largest diameter (17) is in the form of a disc accommodated in the second bore (6) of the casing (2) and is equipped with two diametrally opposed holes (18) for receiving measuring rods (19 and 19') co-operating with transverse grooves (20) of the tools to be adjusted (21), the device (3) being fixed freely rotatably in the casing (2) by means of an elastic ring (22).

4. A boring head according to any one of claims 1 to 3, characterised in that the means (4) for actuating the device (3) is in the form of an endless screw positioned in a receiver (23) in the casing (2) tangentially and perpendicularly to the first bore (5) and meshing with the helical teeth (16) of the device (3), this screw (4) being provided at one end with a control polygon in the form of a hexagonal socket (24) accessible through a hole (26) in the body (1), an elastic ring (25) fixed to its other end ensuring that it is held in the receiver (23).

5. A boring head according to any one of claims 1 to 4, characterised in that the measuring rods (19 and 19') are fixed tightly or stuck in the holes (18) of the large diameter portion (17) of the device (3) and one of the measuring rods (19) is mounted so as to project toward the corresponding tool (21) and flush with the lower face of the portion (17) while the other measuring rod (19') projects from the two sides of the portion (17) by a height approximately equal to half of the projecting height of the measuring rod (19) and corresponding to the possible axial displacement of the casing (2) in the bore of the body (1) and penetrates, at its lower portion, into the arc-shaped groove (7) of the casing (2) and, at its upper portion, into the transverse groove (20) of the corresponding tool (21).

6. A boring head, essentially formed by a body (1) for fixing in a mounting support, by a device (3) for radial adjustment of the tools, and by a means (4') for actuating the device (3), the adjusting device (3) and the actuating means (4') being held directly in the body (1), the device (3) for radial adjustment of the tools (21) being mounted in the body (1) with the possibility of axial displacement under the influence of the actuating means (4'), and being in the form of a rotatably movable driving wheel (31) co-operating, by means of measuring rods (19 and 19'), with transverse grooves (20) of the tools to be adjusted (21) to displace the tools (21) in opposite directions to one another, the free end of the rod (39) of the wheel (31) being loaded by an axial spring (39) accommodated in a perforation (40) in the body (1) and the driving wheel (31) being set into rotation by means of an adjusting screw (41) extending orthogonally to the rod (32) of the wheel (31), characterised in that the adjusting screw (41) drives a tenon (42) equipped with a receiver (43) co-operating with one of the measuring rods (19) traversing the wheel (31) for this purpose and is held against translation in its receiver (44) by means of a pin (45) co-operating with a furrow (46) provided at its end.

7. A boring head according to claim 6, characterised in that the wheel (31) comprises, on the side remote from the tools (21), a rod (32) equipped close to its free end with a wide circumferential groove (33) for maintaining height in the body (1) and in which there penetrates a stop screw (34) for limiting the axial displacement of the wheel (31).

8. A boring head according to any one of claims 6 and 7, characterised in that the means (4') for actuating the device (3) into axial displacement is formed by a cam screw (35) extending orthogonally to the axis of the wheel (31) and having, in its central portion, a recess of which the end remote from the thread of the screw (35) is in the form of a cone (36) co-operating with a cone (37) provided on the rod (32) of the wheel (31) between the groove (33) and said wheel (31), and a pin (38) projecting slightly into the receiver of the cam screw (35) limits the displacement of the cam screw (35) in the direction in which its cone (36) moves away from the cone (37) of the wheel (31).

9. A boring head according to claim 6, characterised in that the screw (41) is advantageously controlled by means of a hexagonal socket (47) and the head (48) of the screw has a conical face equipped with graduations (49).

## Ansprüche

1. Ausdrehkopf, im wesentlichen bestehend aus einem Haltekörper (1) bei einem Träger, aus einem Aufnahmegehäuse (2) mit Teilen, die beweglich angeordnet sind, mit der Möglichkeit der axialen Verschiebung im Körper (1), aus einer Vorrichtung (3) zur radialen Einstellung der Werkzeuge, und au seinem Betätigungsmittel (4) für die Vorrichtung (3), wobei die Einstellvorrichtung (3) und die Betätigungsmittel im Gehäuse (2) gehalten sind,
dadurch gekennzeichnet, daß das Gehäuse (2) ein zylindrisches Bauteil ist, das in einer Aufnahmebohrung des Körpers (1) lageveränderlich gehalten ist, und das einerseits mit einer ersten Bohrung (5) versehen ist, die an derjenigen Stirnseite des Gehäuses (2) mündet, die dem Boden der Bohrung des Körpers (1) zugewandt ist, sowie mit einer zweiten Bohrung (6) mit einem größeren Durchmesser als der der ersten Bohrung (5) und konzentrisch zu dieser, die an der anderen Stirnseite des Gehäuses (2) mündet, und das andererseits eine Kreisbogennut (7) aufweist, die teilweise um die erste Bohrung (5) herum am Boden der zweiten Bohrung (6) angeordnet ist, sowie eine Längsnut (8), die parallel zu seiner Längsachse auf seiner Außenseite verläuft und mit einer Schraube (9) zusammenwirkt, die im Körper (1) befestigt ist und einen Anschlag bildet, wobei der Zugang zu dieser Schraube (9) mit einem Stopfen (10) gesichert ist.

2. Ausdrehkopf nach Anspruch 1, dadurch gekennzeichnet, daß das Gehäuse (2) außerdem an seinem Umfang zwei konische Vertiefungen (11) aufweist, die sich diametral gegenüberliegen und die mit zwei Stiften (12) mit konischem Kopf zusammenwirken, die im Körper (1) gehalten sind und die das Gehäuse (2) in Richtung zum Boden der Bohrung des Körpers (1) verschieben, sowie auf der dem Boden der Bohrung des Körpers (1) zugewandten Stirnseite Führungsausnehmungen (13) in regelmäßigen Abständen und Lagereinrichtungen (14), die diese Stirnseite beaufschlagen.

3. Ausdrehkopf nach einem der Ansprüche 1 oder 2, dadurch gekennzeichnet, daß die Vorrichtung (3) zur radialen Einstellung ein zylindrisches Element ist, dessen Abschnitt (15) mit geringstem Durchmesser eine spiralförmige Nut (16) aufweist, die sich um den gesamten Umfang oder einem Teil davon erstreckt, und das in der ersten Bohrung (5) des Gehäuses (2) sitzt, wobei sein scheibenförmiger Abschnitt (17) mit größerem Durchmesser von der zweiten Bohrung (6) des Gehäuses (2) aufgenommen wird und zwei diametral gegenüberliegende Bohrungen (18) zur Aufnahme von Meßzapfen (19 und 19') aufweist, die mit Quernuten (20) des Steuerwerkzeuges (21) zusammenwirken, und daß die Vorrichtung (3) im Gehäuse (2) mittels eines elastischen Rings (22) frei drehbar gehalten ist.

4. Ausdrehkopf nach einem der Ansprüche 1 bis 3, dadurch gekennzeichnet, daß das Betätigungsmittel (4) für die Vorrichtung (3) ein Gewindebolzen ist, der in einem Lager (23) des Gehäuses (2) sich tangential und senkrecht zur ersten Bohrung (5) erstreckt, im Eingriff mit der spiralförmigen Nut (16) der Vorrichtung (3), und der an einem Ende einen polygonförmigen Betätigungsabschnitt aufweist in Form eines Sechskantimbus (24), der durch eine Bohrung (26) des Körpers (1) zugänglich ist, und einen elastischen Ring (25) auf seinem anderen Ende, der seinen Sitz im Lager (23) sicherstellt.

**5.** Ausdrehkopf nach einem der Ansprüche 1 bis 4, dadurch gekennzeichnet, daß die Zapfen (19 und 19') in den Bohrungen (18) des Abschnitts (17) mit größerem Durchmesser der Vorrichtung (3) fest gehalten oder verleimt sind, und daß einer der Zapfen (19) in Richtung zum Werkzeug (21) hin herausragt und mit der Unterseite des Abschnitts (17) bündig abschließt, während der andere Zapfen (19') auf beiden Seiten des Abschnitts (17) etwa halb so weit herausragt wie der Zapfen (19), entsprechend der möglichen axialen Verschiebung des Gehäuses (2) in der Bohrung des Körpers (1), und der mit seinem unteren Abschnitt in die Kreisbogennut (7) des Gehäuses (2) und mit seinem oberen Abschnitt in die Transversalnut (20) des entsprechenden Werkzeuges (21) eingreift.

**6.** Ausdrehkopf, im wesentlichen bestehend aus einem Haltekörper (1) bei einem Montageträger, aus einer Vorrichtung (3) zur radialen Einstellung der Werkzeuge, und aus einer Betätigungsvorrichtung (4') für die Vorrichtung (3), wobei die Einstellvorrichtung (3) und die Betätigungsvorrichtung (4') unmittelbar im Haltekörper (1) gehalten sind, wobei die Vorrichtung (3) zur radialen Einstellung der Werkzeuge (21) im Körper (1) mit der Möglichkeit einer axialen Verschiebung unter der Einwirkung der Betätigungsvorrichtung (4') angeordnet ist, und als frei bewegliches Antriebsrad (31) ausgebildet ist, das mit Hilfe von Zapfen (19 und 19') mit Transversalnuten (20) der einzustellenden Werkzeuge (21) zusammenwirkt, um letztere entgegengesetzt zueinander zu verschieben, wobei das freie Ende des Schaftes (32) des Antriebsrades (31) von einer axial wirkenden Feder (39) beaufschlagt wird, die in einer Bohrung (40) des Körpers (1) sitzt, wobei das Antriebsrad (31) mittels einer Stellschraube (41) in Drehung versetzt wird, die senkrecht zum Schaft (32) des Antriebsrades (31) verläuft, dadurch gekennzeichnet, daß die Stellschraube (41) einen Stift (42) antreibt, der in einer Ausnehmung (43) sitzt und mit einem der Zapfen (19) zusammenwirkt, der zu diesem Zweck das Antriebsrad (31) durchgreift, und daß sie in ihrem Lager (44) mittels eines Stiftes (45) gegen Verschiebung gesichert ist, der mit einer Rinne (46) an ihrem Ende zusammenwirkt.

**7.** Ausdrehkopf nach Anspruch 6, dadurch gekennzeichnet, daß das Antriebsrad (31) an seiner den Werkzeugen (21) abgewandten Seite einen Schaft (32) aufweist, der nahe bei seinem Ende eine breite Umfangsnut (33) zur Höhenfixierung im Körper (1) aufweist, in die ein Arretierungsstift (34) zur Begrenzung der axialen Verschiebung des Antriebsrades (31) eingreift.

**8.** Ausdrehkopf nach einem der Ansprüche 6 und 7, dadurch gekennzeichnet, daß die Betätigungsvorrichtung (4') für die axiale Verschiebung der Einstellvorrichtung (3) aus einer Nockenschraube (35) besteht, die senkrecht zur Achse (31) verläuft und die in ihrem mittleren Abschnitt eine Einschnürung aufweist, deren gegenüber dem Gewinde der Nockenschraube (35) liegendes Ende als Konus (36) ausgebildet ist, der mit einem Konus (37) zusammenwirkt, der auf dem Schaft (32) des Antriebsrades (32) zwischen der Nut (33) und diesem Antriebsrad (31) vorgesehen ist, wobei ein Stift (38), der über die Bohrung der Nockenschraube (35) verläuft, deren Verschiebung bei der Entfernung des Konus (36) vom Konus (37) des Antriebsrades (31) begrenzt.

**9.** Ausdrehkopf nach Anspruch 6, dadurch gekennzeichnet, daß die Betätigung der Stellschraube (41) vorteilhafterweise mittels eines Sechskantimbus (47) bewirkt wird, und daß der Kopf (48) der Stellschraube stirnseitig konisch ausgebildet und dort mit Rillungen versehen ist.

Fig.1

Fig.2

Fig.3

Fig.4

Fig.5

Fig.6

Fig.7

Fig.8

Fig.9

Fig.10

Fig.11

Fig.12